Europäisches Patentamt

European Patent Office

Office européen des brevets

(11) Publication number: **0 266 994**
**A2**

# (12) EUROPEAN PATENT APPLICATION

(21) Application number: 87309686.1

(22) Date of filing: 02.11.87

(51) Int. Cl.⁴: **C08F 291/00** , **C08F 2/02** , **C09J 3/14**

(30) Priority: 04.11.86 GB 8626353

(43) Date of publication of application:
11.05.88 Bulletin 88/19

(84) Designated Contracting States:
**BE DE FR GB IT NL SE**

(71) Applicant: **DU PONT CANADA INC.**
**Box 2200 Streetsville Postal Station**
**Mississauga Ontario L5M 2H3(CA)**

(72) Inventor: **Wong, Po Cheong**
**646 E 21st Avenue**
**Vancouver, B.C. V5V 1P9(CA)**

(74) Representative: **Ellis, John Clifford Holgate et al**
**MEWBURN ELLIS & CO. 2/3 Cursitor Street**
**London EC4A 1BQ(GB)**

(54) **Process for the grafting of monomers onto polymers.**

(57) A process for the grafting of ethylenically unsaturated monomers e.g. maleic anhydride, onto copolymers of ethylene and derivatives of certain carboxylic acids is disclosed. Examples of the copolymers include ethylene/vinyl acetate copolymers and ethylene/alkyl(meth)acrylate copolymers. In the process, admixtures of copolymer, monomer and 25-3000 ppm of organic peroxide are admixed so as to obtain a uniform distribution of monomer and peroxide in the copolymer and then mixed at a temperature above the melting point of the copolymer for a period of time that is at least four times the half-life of the organic peroxide. The resultant grafted copolymer is extruded. In embodiments, the admixture may be formed by sequentially coating the copolymer with organic peroxide and the monomer or by admixing copolymer with second polymers containing the organic peroxide and monomer. The grafted copolymers are useful in the manufacture of adhesives.

EP 0 266 994 A2

## PROCESS FOR THE GRAFTING OF MONOMERS ONTO POLYMERS

The present invention relates to a process for the grafting of ethylenically unsaturated monomers onto polymers and especially to the grafting of such monomers onto copolymers of ethylene with derivatives of certain carboxylic acids, such derivatives being ethylenically unsaturated.

Copolymers of ethylene with unsaturated carboxylic acid and ester monomers, including ionomers, are known and include ethylene/vinyl acetate copolymers, ethylene/ethyl acrylate copolymers and ethylene/(meth)acrylic acid copolymers, and ionomers of the latter copolymers. Such copolymers have a variety of end-uses and in embodiments are used in the manufacture of adhesives, as coatings and in the form of blends with other polymers e.g. polyolefins.

It is known that the properties of polyolefins may be modified by the grafting of ethylenically unsaturated carboxylic acids and anhydrides onto hydrocarbon alpha-olefins. In U.S. Patent 2 973 344, which issued 1961 February 28, E.V. Fasce describes the grafting of unsaturated alpha-beta dicarboxylic acid anhydrides onto low-pressure polyalkylene polymers, including grafting in the absence of solvent. A process for the grafting of unsaturated monomers onto homopolymers of ethylene and copolymers of ethylene and C₄-C₁₀ higher alpha-olefins is described in U.S. Patent 4 612 155 of C.S. Wong and R.A. Zelonka, which issued 1986 September 16. Japanese patent application 57 030 745 of Toyo Soda, published 1982 February 19, discloses blends of (a) phenol resin and (b) carboxyl-modified ethylene/vinyl acetate copolymer that preferably is prepared by reacting 100 parts by weight of ethylene/vinyl acetate copolymer with alpha,beta unsaturated carboxylic acid or anhydride under melt conditions in the presence of 0.001-1 parts by weight of a radical initiator e.g. di-tert.butyl peroxide or tert.butyl peracetate.

The use of copolymers, including graft copolymers, of ethylene and ethylenically unsaturated carboxylic acids and anhydrides in film laminates is known. For example, European patent publication No. 160 984-A of Kuraray KK, published 1985 November 13, describes such a use of ethylene/acrylate ester/ethylenically unsaturated carboxylic acid and anhydride copolymers. The use of copolymers of (meth)acrylate esters and ethylenically unsaturated acids ·or anhydrides is disclosed in Japanese patent application No. 59 152 852 of Kuraray KK, published 1984 August 31. The use of the related copolymers of ethylene/vinyl acetate is disclosed in Japanese patent applications 59 229 338 of Kuraray KK and 59 024 665 of Dainippon Printing KK, published 1983 June 10 and 1984 February 08, respectively. Hot melt adhesives, formed from ethylene/vinyl acetate copolymers that have been peroxygenated with atmospheric oxygen and then grafted with methacrylic acid units, are disclosed in U.S. Patent 4 602 056 of H. Waniczek et al., which issued 1986 July 22. The production of laminates using ethylene/vinyl acetate copolymers graft-modified with unsaturated carboxylic acids or anhydrides is disclosed in Japanese patent publication 59-55743 of Mitsubishi Petrochemical Co. Ltd., published 1984 March 30.

It is important in the grafting of monomers onto polymers that a uniform product be obtained. If the grafting process is not carried out in a uniform manner, the resultant product may exhibit variable, and unacceptable, properties, especially with respect to adhesion to other materials. Moreover, it is important to be able to graft monomers onto polymers without causing major changes in the physical properties of the polymer.

A process has now been found for the grafting of ethylenically unsaturated carboxylic acids and anhydrides onto copolymers of ethylene with derivatives of certain carboxylic acids, such derivatives being ethylenically unsaturated, in which mixtures of copolymer, grafting monomer and organic peroxide are admixed and then fed to an extrusion device.

Accordingly, the present invention provides a process for the grafting of an ethylenically unsaturated monomer onto a copolymer, said monomer being selected from the group consisting of ethylenically unsaturated carboxylic acids, and anhydrides and other derivatives thereof, and said copolymer being selected from the group consisting of

(a) copolymers of ethylene with at least one monomer selected from the group consisting of vinyl alkanoates, alkyl acrylates, alkyl methacrylates, acrylic acid, methacrylic acid and carbon monoxide, and

(b) ionomers of copolymers of (a) containing acrylic acid or methacrylic acid, and mixtures thereof, said process comprising:

(i) forming an admixture of said copolymer, monomer and 25-3000 ppm of an organic peroxide having a half-life of from about one minute to about 120 minutes at 150°C, and admixing so as to obtain a uniform distribution of monomer and peroxide in the copolymer,

(ii) mixing the resultant admixture in an extruder at a temperature above the melting point of said copolymer for a period of time that is at least four times the half life of the organic peroxide, and

(iii) extruding the resultant grafted copolymer into a shaped article.

In a preferred embodiment of the process of the present invention, the ethylenically unsaturated acid and anhydride are maleic acid and maleic anhydride, respectively.

The present invention also provides a process for the grafting of an ethylenically unsaturated monomer onto a copolymer, said monomer being selected from the group consisting of ethylenically unsaturated carboxylic acids, and anhydrides and other derivatives thereof, and said copolymer being selected from the group consisting of (a) copolymers of ethylene with at least one monomer selected from the group consisting of vinyl alkanoates, alkyl acrylates, alkyl methacrylates, acrylic acid, methacrylic acid and carbon monoxide and (b) ionomers of copolymers of (a) containing acrylic acid or methacrylic acid, and mixtures thereof, said process comprising:

(i) coating particles of said copolymer with 25-3000 ppm of an organic peroxide having a half-life of from about one minute to about 120 minutes at 150°C, and permitting the coated particles so obtained to absorb the organic peroxide into the particles,

(ii) further coating the particles with said monomer and permitting the resultant coated particles to absorb the monomer into the particles,

(iii) admixing the coated particles in an extruder at a temperature above the melting point of the copolymer for a period of time such that the amount of decomposition of the organic peroxide is less than 25%, said period of time being at least ten seconds,

(iv) mixing the resultant admixture thus obtained for a further period of time in the extruder that is at least four times that of the half life of the organic peroxide, and

(v) extruding the grafted copolymer thus obtained into a shaped article.

The present invention further provides a process for the grafting of an ethylenically unsaturated monomer onto a copolymer, said monomer being selected from the group consisting of ethylenically unsaturated carboxylic acids, and anhydrides and other derivatives thereof, and said copolymer being selected from the group consisting of

(a) copolymers of ethylene with at least one monomer selected from the group consisting of vinyl alkanoates, alkyl acrylates, alkyl methacrylates, acrylic acid, methacrylic acid and carbon monoxide, and

(b) ionomers of copolymers of (a) containing acrylic acid or methacrylic acid, and mixtures thereof, said process comprising:

(i) feeding a physical admixture to an extruder equipped with a mixing screw, said physical admixture being comprised of (a) a major portion of particles of said copolymer, (b) a minor portion of particles of a second polymer, (c) said monomer and (d) 25-3000 ppm of an organic peroxide having a half-life of from about one minute to about 120 minutes at 150°C, said copolymer being as defined above, said second polymer being a normally solid thermoplastic polymer having a melting point of less than 180°C and a shear viscosity that is not more than 100% of that of the polymer when measured at 200°C and a shear rate of 400 sec$^{-1}$, said organic peroxide being in the form of a composition with said second polymer, said monomer being in the form of a coating on said particles and/or in the form of a composition with said second polymer,

(ii) mixing said admixture in a first zone of the extruder at a temperature above the melting point of both said copolymer and second polymer for a period of time such that the amount of decomposition of the organic peroxide is less than about 25%, said period of time being at least ten seconds,

(iii) mixing the resultant admixture in a second zone of the extruder at a temperature above the melting point of both the copolymer and second polymer for a period of time that is at least four times the half-life of the peroxide, and

(iv) extruding the grafted copolymer so obtained into a shaped article.

In a preferred embodiment of the process of the present invention, the temperature of the admixture in the second zone is higher than the temperature in the first zone of the extruder.

The copolymer that is grafted according to the process of the present invention may be a copolymer of ethylene and a vinyl alkanoate, especially ethylene/vinyl acetate copolymers. Alternatively, the copolymer may be a copolymer of ethylene and an alkyl acrylate, examples of which are ethylene/ethyl acrylate copolymers, ethylene/methyl acrylate copolymers and ethylene/butyl acrylate copolymers. Similarly, the copolymer may also be a copolymer of ethylene and an alkyl methacrylate e.g. ethylene/ methyl methacrylate. Other copolymers include copolymers of ethylene with acrylic acid or methacrylic acid, and analogous ionomers viz. copolymers having the acid groups thereof partially neutralized by metals especially with sodium, zinc or aluminum. Additionally, the copolymer may be a copolymer of ethylene with carbon monoxide, optionally also with one of the aforementioned monomers, examples of which are ethylene/carbon monoxide, ethylene/butyl acrylate/carbon monoxide, and ethylene/vinyl acetate/carbon monoxide copolymers. Such copolymers are known in the art and many examples thereof are available commercially.

The copolymers may have a relatively high ethylene content, and tend to be non-tacky copolymers, or lower ethylene contents, and tend to be relatively tacky copolymers, including copolymers that in pellet form tend to agglomerate. In addition, the copolymers are available in a variety of molecular weights, which is usually expressed in terms of melt index. Melt index is measured by the procedure of ASTM D-1238 (condition E). The particular copolymer, including with respect to ethylene content and molecular weight, that is subjected to the process of the present invention will depend in particular on the intended end-use of the grafted copolymer that is obtained from the process.

The organic peroxide, which as used herein includes hydroperoxides, may for example be a bis(tert. alkyl peroxy alkyl) benzene, dicumyl peroxide or acetylenic diperoxy compound. Other organic peroxides are known to those skilled in the art, including t-butyl hydroperoxide and di-t-butyl peroxide. The organic peroxides used in the process of the present invention. have a half-life at 150°C of from about one minute to about 120 minutes. A preferred organic peroxide is 2,5-dimethyl-2,5-bis-(tert. butyl peroxyisopropyl) benzene which is available under the trade mark Vulcup from Hercules Inc. Other preferred organic peroxides are 2,5-dimethyl-2,5-di(t-butyl peroxy) hexane and 2,5-dimethyl-2,5-di(t-butyl peroxy) hexyne-3 which are available under the trade marks Lupersol 101 and Lupersol 130, respectively, from Lucidol Division of Pennwalt Corporation.

The monomer is selected from the group consisting of ethylenically unsaturated carboxylic acids and ethylenically unsaturated carboxylic acid anhydrides, including derivatives of such acids. Examples of the acids and anhydrides, which may be mono-, di-or polycarboxylic acids, are acrylic acid, methacrylic acid, maleic acid, fumaric acid, itaconic acid, crotonic acid, itaconic anhydride, maleic anhydride and substituted maleic anhydride e.g. dimethyl maleic anhydride. Examples of derivatives of the unsaturated acids are salts, amides, imides and esters e.g. mono-and disodium maleate, acrylamide, maleimide and diethyl fumarate.

The amount of organic peroxide will depend in particular on the characteristics of the copolymer but will be in the range of 25-3000 ppm, especially 100-1500 ppm, based on the weight of the copolymer in the admixture fed to the extruder, and particularly in the range of. 100-1000 ppm. It is an important characteristic of the present invention that low levels of organic peroxide may be used, while still effecting high levels of grafting. Such low levels result in relatively small changes in the properties of the copolymer, especially relatively small changes in the melt index thereof on extruding the polymer mixture.

The amount of organic peroxide may also depend on the nature and amount of any additives in the copolymer, and second polymer, if present. For example, the additives may include a stabilizing agent e.g. an antioxidant. Examples of antioxidants are hindered phenolic antioxidants e.g. octadecyl-3,5 di-tert. butyl-4-hydroxy cinnamate and tetrakis-methylene-3-(3′,5′-di-tert. butyl-4-hydroxy phenyl) propionate methane. Hindered phenolic antioxidants may be used in combination with a phosphite antioxidant e.g. di(stearyl) pentaerythritol diphosphite, tris di-tert. butyl phenyl phosphite, dilauryl thiodipropionate and bis(2,4-tert butylphenyl) pentaerythritol diphosphite. Ultra violet stabilizers may also be added to the compositions of the invention. Some additives e.g. stabilizing agents may have detrimental effects on the grafting process and for that reason it may be preferable not to use certain combinations of additives, as will be understood by those skilled in the art.

The amount of monomer will depend in particular on the reactivity of the monomer and the level of grafting that is to be achieved. For example, if the monomer is maleic anhydride, the amount of monomer may be as high as about 5%, especially 0.1-2%, by weight of the copolymer, and particularly in the range of 0.2-1.5% by weight. With other monomers, different amounts of monomer may be preferred.

In an embodiment of the present invention, pellets, or particles of another convenient shape, of the copolymer are coated with the organic peroxide. Techniques for such coating of the pellets will be understood by those skilled in the art. The organic peroxide is permitted to absorb into the pellets, preferably for a period of time such that the organic peroxide is at least substantially uniformly distributed throughout the pellets of the copolymer. Such a period of time may be several hours and, in embodiments, the organic peroxide is permitted to absorb into the copolymer for a period of at least ten hours. The pellets thus obtained are then coated or admixed with the monomer, and fed to an extruder. The coated pellets or admixture obtained may be fed directly to the extruder but in preferred embodiments the monomer is permitted to at least partially absorb into the pellets prior to being subjected to the extruder.

In embodiments in which the monomer and organic peroxide are present as compositions with a second polymer, the characteristics of the second polymer differ from those of the copolymer in that the second polymer has a shear viscosity that is not more than 100%, especially not more than 50%, of that of the copolymer when measured at 200°C and a shear rate of 400 sec⁻¹. Preferably, the shear viscosity of the second polymer is not more than 30% of that of the copolymer. Moreover, the second polymer is a normally solid thermopolastic polymer and may include materials frequently referred to as solid waxes but does not include materials that are liquids at ambient temperatures and pressures; copolymer and second polymer are fed to the extruder in the form of physical admixtures and are therefore capable of separation into the respective components at ambient temperatures.

In preferred embodiments, the second polymer is selected from the group consisting of:

A. homopolymers and copolymers of unsaturated hydrocarbons;

B. copolymers of an alpha-olefin having the formula $R-CH = CH_2$, where R is a radical selected from the class consisting of hydrogen and alkyl radicals having from 1 to 8 carbon atoms, with esters of alpha,beta-ethylenically unsaturated acids having from 3 to 8 carbon atoms;

C. graft copolymers obtained by grafting 0.1 to 5 percent by weight of alpha-beta unsaturated carboxylic acids having 3 to 8 carbon atoms or an unsaturated carboxylic acid anhydride thereof onto a preformed backbone derived from ethylene or ethylene and $C_3$ to $C_8$ alpha-olefin,;

D. homopolymers of $R'-CH = CH-R'$ where each R' is independently selected from the group consisting of H, Cl and F, with the proviso that at least one R' is other than H, copolymers of ethylene with $R'-CH = CH-R'$ and chlorinated homopolymers and copolymers of $C_2-C_{10}$ hydrocarbon alpha-olefins;

E. saturated polyamides and polyesters;

F. homopolymers of vinyl esters of aliphatic carboxylic acids having 3 to 8 carbon atoms, copolymers of ethylene with such esters, and partially saponified polymers thereof; and

G. copolymers of (B) in which all or part of the alpha-olefin has been replaced by styrene or alkyl styrene, where the alkyl group has 1 or 2 carbon atoms.

In particularly preferred embodiments, the second polymer is selected from the group consisting of homopolymers and copolymers of hydrocarbon alpha-olefins having 2-10 carbon atoms, e.g. homopolymers of ethylene, propylene or butene-1 and copolymers of ethylene with $C_3-C_{10}$ higher alpha-olefins, especially copolymers of ethylene with butene-1, hexene-1 and/or octene-1. Preferably, the second polyolefin is a homopolymer of ethylene and/or a copolymer of ethylene and a $C_4-C_{10}$ higher alpha-olefin.

Examples of other second polymers include ethylene/propylene elastomers, polystyrene, block copolymers e.g styrene/butadiene/styrene copolymers and ethylene/vinyl.acetate copolymers.

In embodiments using a second polymer, the ratio of the copolymer to the second polymer may be varied over a wide range, particularly from about 5:1 to about 400:1, especially 10:1 to 100:1. The ratio selected will depend on a variety of factors, including the amount of organic peroxide and monomer to be incorporated into the copolymer, the mixing capabilities of the apparatus and the like.

In embodiments using a second polymer, the organic peroxide and monomer may be in the form of a powder in the admixture but it is preferred that the organic peroxide and monomer be in the form of a coating on or a blend with the copolymer or in the form of compositions with the second polymer. Such compositions may be in the form of a coating of peroxide and/or monomer on the second polymer or a blend with the second polymer, or a combination thereof. The organic peroxide may in the form of a composition with one second polymer and the monomer may be in the form of a composition with another second polymer, such second polymers being the same or different. Techniques for forming compositions of organic peroxide and/or monomer with the second polymer, as coatings and/or blends or the like, are known in the art. Such methods include melt blending, coating and extrusion, injection into molten polymer and solidification of the resultant blend. The organic peroxides and monomer should be formed into the composition with the second polymer in a manner that does not result in premature reaction of organic peroxide and/or monomer with the second polymer or, if combined, with each other.

The particles of the copolymer, and second polymer if present, may be any convenient shape and size and may be, for example, granules, powder, pellets or the like. Such forms are commercially available forms of polymers and/or may be obtained by known techniques e.g. grinding, melt pelletization or the like.

In an embodiment of the process of the present invention, copolymer, organic peroxide and monomer are fed to an extruder, the process being operated as a continuous process. The extruder should be equipped with a mixing screw. In the first zone of the extruder, the resultant admixture is admixed, preferably for at least ten seconds at a temperature above the melting point of both the copolymer and the second polymer. During this period of mixing, which occurs in a mixing zone in the extruder, the amount of decomposition of the organic peroxide should be less than about 25% thereof; information on the rate of decomposition of organic peroxides at various temperatures is available e.g. from the supplier of the organic peroxide, or may be determined by those skilled in the art, and may be used in the selection of the organic peroxide and/or the temperature profile in the extruder. It is important that the amount of decomposition be low so that mixing of the components of the admixture is achieved prior to substantial decomposition of the organic peroxide and the resultant grafting of the monomer onto the copolymer.

The resultant polymer mixture is then further heated in a second zone in the extruder for a period of time that is at least four times the half-life of the organic peroxide. Preferably the temperature of the polymer admixture in the second zone is in the range of 170-280°C and especially 180-240°C.

As will be appreciated by those skilled in the art, single and twin screw extruders often have multiple heating zones. The first and second zones referred to herein may encompass more than one zone of the extruder but would in combination normally substantially or fully encompass all of the heating zones of the extruder. With regard to the mixing capabilities of the apparatus, twin screw extruders may be more effective than single screw extruders.

While the hold-up time of the polymer in the extruder will depend on a number of factors, including the particular extruder being used and the rate of extrusion, it is preferred that the hold-up time of the polymer in the extruder be less than two minutes.

The use of the process of the present invention permits the manufacture of commercially-acceptable products in a continuous process, using low levels of organic peroxide, to give a balance of properties not readily attainable by other means, especially grafting of monomer with minimal cross-linking or shear degradation of the copolymer. In particular, the present invention provides a method of preparing grafted copolymers in which the grafted polymer has a melt index of 10-200% of that of the copolymer prior to grafting, especially 40-90% thereof. The invention also provides a method of grafting monomers onto the copolymers with high grafting yield. For example, under favourable circumstances, especially low levels of antioxidant, yields of 50% or more may be achieved.

The process of the present invention may be used to produce compositions of monomer grafted onto the copolymers. The shaped articles produced by the process of the present invention will usually be pellets or other comminuted shapes, but are not restricted thereto. The grafted polymers may be used as such or as blends with other polymers, especially in the form of adhesive compositions for use with polymers and/or metals, in coextrusion of multiple layer structures, in coating compositions, as compatiblilizers in filled compositions and to improve the dyeability and paintability of polymers.

Adhesion of grafted polymer to an ethylene/vinyl alcohol copolymer (EVOH) was measured using a Coextrusion peel strength test, as follows:

The EVOH and grafted product were coextruded through a die having a width of 10.2 cm so as to produce a film in which each layer of the coextruded film had a thickness of about 0.025 mm. The temperature of the die through which the film was extruded was 235°C. The strength of the bond between the layers of EVOH and grafted product was measured using an InstronTM tester, by peeling apart samples having a width of 2.54 cm at a speed of 30.5 cm/min and at a peel angle of 90°.

The present invention is illustrated by the following examples:

Example I

A sample of 1960g of an ethylene/vinyl acetate copolymer having a melt index of 1 dg/min and a vinyl acetate content of 12% by weight, obtained from C-I-L Inc. of Toronto, Ontario under the trade designation 1220, was coated with 1g of Lupersol 130 organic peroxide in a HenschelTM mixer. 40g of maleic anhydride was then added to the organic peroxide-coated polymer thus obtained, and was admixed in the mixer until the temperature of the polymer increased to 70°C. After cooling overnight, the resultant coated polymer was extruded through a BrabenderTM single screw extruder, equipped with a 1.9cm screw, at a melt temperature of 220°C.

The product obtained had a melt index of 0.64 dg/min and contained 0.35% by weight of grafted maleic anhydride.

Samples of both the grafted and ungrafted polymers were pressed into film between sheets of aluminum at a temperature of 180°C for about 5 seconds. The grafted ethylene/vinyl acetate copolymer showed good adhesion to the aluminum whereas the ungrafted copolymer showed poor adhesion.

## Example II

A sample of 70kg of an ethylene/vinyl acetate copolymer having a melt index of 2.0 dg/min and a vinyl acetate content of 8.9% by weight was coated with 400 ppm of Lupersol 130 organic peroxide. The organic peroxide was allowed to absorb into the copolymer overnight and then the copolymer was coated with 1.1% by weight of maleic anhydride. The resultant admixture was retained overnight and then extruded using a twin-screw extruder; the zones of the extruder had temperatures ranging from 180 to 230°C and the melt temperature of the polymer was 212°C.

The resultant product had a melt index of 1.9 dg./min. and a maleic anhydride content of 0.4% by weight.

A composition of 30% by weight of grafted polymer in an ethylene/vinyl acetate copolymer, having a melt index of 0.8 dg/min and a vinyl acetate content of 9% by weight, exhibited a peel strength of 144 g/cm in the Coextrusion peel strength test. Using the test with aluminum foil described in Example I, the grafted copolymer showed good adhesion to aluminum.

## Example III

25 Kg of a pelletized ethylene/vinyl acetate copolymer having a melt index of 19 dg/min and a vinyl acetate content of 25% by weight, was coated with 500 ppm of Lupersol 130 organic peroxide and retained overnight. A second coating of 1.6% by weight of maleic anhydride was then applied to the pellets. After a period of time, the resultant pellets were admixed in a twin-screw extruder using the procedure of Example II.

The product obtained had a melt index of 10.7 dg/min and a maleic anhydride content of 0.6%.

In the Coextrusion peel strength test, the peel strength obtained using a composition of 30% by weight of the grafted product of this example and 70% by weight of an ethylene/vinyl acetate copolymer having a melt index of 0.35 dg/min and a vinyl acetate content of 12% by weight, was 250 g/cm. The grafted polymer also exhibited good adhesion to aluminum.

## Example IV

25 Kg of a pelletized ethylene/vinyl acetate copolymer having a melt index of 2.5 dg/min and an vinyl acetate content of 18% by weight, was dry blended with 1.6 kg of a linear low density polyethylene (ethylene/butene-1 copolymer) having a density of 0.924 g/cm³ and a melt index of 53 dg/min that had been coated with 3300 ppm of Lupersol 130 organic peroxide. The resultant blend was coated with 1% by weight of maleic anhydride and subsequently extruded through a twin-screw extruder, the temperatures of the zones of the extruder being between 180°C and 230°C and the melt temperature of the polymer being 230°C.

The product obtained had a melt index of 2.3 dg/min and a maleic anhydride content of 0.5% by weight. The product was dyeable with basic dyes and exhibited good adhesion to aluminum, steel, ethylene/vinyl alcohol copolymer and polyamide in a hot press adhesion test. In the Coextrusion peel strength test, a composition of 30% by weight of grafted polymer and 70% of an ethylene/vinyl acetate copolymer, having a melt index of 0.35 dg/min and a 10 vinyl acetate content of 12% by weight, had a peel strength of 125 g/cm.

## Example V

65.8 Kg of a pelletized ethylene/vinyl acetate copolymer having a melt index of 2.0 dg/min and a vinyl acetate content of 8.9% by weight was admixed with 4.2 kg of a linear low density polyethylene (ethylene/butene-1 copolymer) having a density of 0.930 g/cm³ and a melt index of 73 dg/min that had been coated with 3300 ppm of Lupersol 130 organic peroxide. The resultant physical admixture was then coated with 1% by weight of maleic anhydride and extruded through a twin-screw extruder in the manner of Example IV, except that the melt temperature was 217°C.

The resultant grafted product had a melt index of 2.5 dg/min and a maleic anhydride content of 0.36% by weight. In the Coextrusion peel strength test, a composition of 30% by weight of the grafted product and 70% by weight of an ethylene/vinyl acetate copolymer, having a melt index of 0.8 dg/min and a vinyl acetate content of 9% by weight, exhibited a peel strength of 110 g/cm, whereas the ethylene/vinyl acetate copolymer in the absence of grafted polymer exhibited a peel strength of less than 20 g/cm.

## Example VI

25 Kg of a pelletized ethylene/ethyl acrylate copolymer having a melt index of 5 dg/min and an ethyl acrylate content of 9% by weight was coated with 400 ppm of Lupersol 130 organic peroxide and retained overnight. A second coating of 1% by weight of maleic anhydride was applied to the pellets and the resultant pellets were extruded through a twin-screw extruder at a melt temperature of 210°C. The product obtained had a melt index of 3.3 dg/min and contained 0.7% by weight of maleic anhydride.

In the Coextrusion peel strength test, a composition of 30% by weight of grafted polymer and 70% by weight of an ethylene/vinyl acetate copolymer, having a melt index of 2.0 dg/min and a vinyl acetate content of 8.9% by weight, exhibited a peel strength of 160 g/cm.

## Example VII

25 Kg of a pelletized ethylene/ethyl acrylate copolymer having a melt index of 6 dg/min and an ethyl acrylate content of 25% by weight was coated with 400 ppm of Lupersol 130 organic peroxide and then stored overnight. A second coating of 1% by weight of maleic anhydride was then applied and the resultant admixture was extruded through a twin-screw extruder at a melt temperature of 210°C. The resultant grafted product had a melt index of 6 dg/min and a maleic anhydride content of 0.6% by weight.

In the Coextrusion peel strength test, a composition of 30% by weight of the grafted product and 70% by weight of an ethylene/vinyl acetate copolymer, having a melt index of 0.8 dg/min and a vinyl acetate content of 9% by weight, exhibited a peel strength of 110 g/cm.

## Example VIII

23.5 Kg of the pelletized ethylene/ethyl acrylate of Example VI was admixed with 1.5 kg of a linear low density polyethylene (ethylene/butene-1 copolymer) having a density of 0.930 $g/cm^3$ and a melt index of 73 dg/min that and which been coated with 3300 ppm of Lupersol 130 organic peroxide. The resultant blend was coated with 1% by weight of maleic anhydride and then extruded through a twin-screw extruder at a melt temperature of 210°C. The product obtained had a melt index of 4.8 dg/min and contained 0.4% by weight of maleic anhydride.

In the Coextrusion peel strength test, using a composition similar to that described in Example VII, the peel strength obtained was 110 g/cm.

## Example IX

A sample of a pelletized ethylene/vinyl acetate copolymer having a melt index of 2 dg/min. and a vinyl acetate content of 8.9% was coated with 1000 ppm of Lupersol 101 organic peroxide and 1.6% by weight of maleic anhydride. The resultant coated pellets were extruded through a twin-screw extruder at a melt temperature of 210°C. The resultant grafted product has a melt index of 0.79 dg/min. and a maleic anhydride content of 0.80% by weight.

In the Coextrusion peel strength test, a composition of 17% by weight of grafted product and 83% by weight of the copolymer described above, exhibited a peel strength of 235 g/cm.

## Example X

90 kg of a pelletized ethylene/vinyl acetate copolymer having a melt index of 2.5 dg/min and a vinyl acetate content of 18% by weight was coated with 2000 ppm of Lupersol 101 organic peroxide and retained overnight. A second coating of 1.8% by weight of meleic anhydride was then applied to the pellets. After a period of time, the resultant pellets were admixed in a twin-screw extruder using the procedure of Example II. The product obtained had a melt index of 1.2 dg/min and a maleic anhydride content of 1.0%.

In the Coextrusion peel strength test, the peel strength obtained using a composition of 10% by weight of the grafted product of this example and 90% by weight of an ethylene/vinyl acetate copolymer having a melt index of 2.5 dg/min and a vinyl acetate content of 18% by weight, was 160 g/cm. The grafted polymer also exhibited good adhesion to aluminum.

## Example XI

45 kg of a pelletized ethylene/vinyl acetate copolymer having a melt index of 2.5 dg/min and a vinyl acetate content of 18% by weight was coated with 100 ppm of Lupersol 130 organic peroxide and retained overnight. A second coating of 1.5% by weight of maleic anhydride was then applied to the pellets. The resultant pellets were extruded through a twin screw extruder at a melt temperature of 240°C. The product obtained had a melt index of 1.0 dg/min and a maleic anhydride content of 1.0%.

## Example XII

90 kg of a pelletized ethylene/vinyl acetate copolymer having a melt index of 19 dg/min and a vinyl acetate content of 25% by weight was coated with 1500 ppm of Lupersol 101 organic peroxide and retained overnight. A second coating of 1.8% by weight of maleic anhydride was then applied to the pellets. After a period of time, the resultant pellets were admixed in a twin-screw extruder using the procedure of Example II.

The product obtained had a melt index of 6.1 dg/min and a maleic anhydride content of 1.1%.

In the Coextrusion peel strength test, the peel strength obtained using a composition of 9% by weight of the grafted product of this example, 15% by weight of NORDEL™ 4167 EPDM rubber, and 76% by weight of an ethylene/vinyl acetate copolymer having a melt index of 2.5 dg/min and a vinyl acetate content of 18% by weight, was 100 g/cm. The grafted polymer also exhibited good adhesion to aluminum.

### Example XIII

90 kg of a pelletized ethylene/vinyl acetate copolymer having a melt index of 43 dg/min and a vinyl acetate content of 33% by weight was coated with 1500 ppm of Lupersol 101 organic peroxide and retained overnight. A second coating of 1.8% by weight of maleic anhydride was then applied to the pellets. After a period of time, the resultant pellets were admixed in a twin-screw extruder using the procedure of Example II.

The product obtained had a melt index of 13 dg/min and a maleic anhydride content of 0.6%.

In the Coextrusion peel strength test, the peel strength obtained using a composition of 17% by weight of the grafted product of this example, 15% by weight of NORDEL 4167 EPDM rubber, and 68% by weight of an ethylene/vinyl acetate copolymer having a melt index of 2.5 dg/min and a vinyl acetate content of 18% by weight, was 120 g/cm.

### Example XIV

45 kg of a pelletized ethylene/ethyl acrylate copolymer having a melt index of 5 dg/min and an ethyl acrylate content of 25% by weight was coated with 500 ppm of Lupersol 130 organic peroxide and retained overnight. A second coating of 1.7% by weight of maleic anhydride was then applied to the pellets. The resultant pellets were extruded through a twin-screw extruder at a melt temperature of 250°C. The grafted product obtained had a melt index of 3.9 dg/min and a maleic anhydride content of 0.8%. The product exhibited good adhesion to aluminum. In the Coextrusion peel strength test, the peel strength obtained using a composition of 12% by weight of the grafted product of this example and 88% by weight of an ethylene/ethyl acrylate copolymer having a melt index of 5 dg/min and an ethyl acrylate content of 25% by weight, was 150 g/cm.

### Example XV

25 kg of pelletized ethylene/methyl acrylate copolymer having a melt index of 6 dg/min and a methyl acrylate content of 20% by weight was coated with 500 ppm of Lupersol 130 organic peroxide and retained overnight. A second coating of 1.6% by weight of maleic anhdyride was then applied to the pellets. The resultant pellets were extruded through a twin-screw extruder at a melt temperature of 267°C. The grafted product obtained had a melt index of 6.7 dg/min and a maleic anhydride content of 0.7%. The product exhibited good adhesion to aluminum.

### Example XVI

50 kg of a pelletized ethylene/n-butyl acrylate/carbon monoxide terpolymer having a melt index of 6 dg/min, an n-butyl acrylate content of 30% by weight, and a carbon monoxide content of 10% was coated with 1000 ppm of Lupersol 130 organic peroxide and retained overnight. A second coating of 1.7% by weight of maleic anhydride was then applied to the pellets. The resultant pellets were extruded through a twin-screw extruder at a melt temperature of 230°C. The grafted product obtained had a melt index of 12 dg/min and a anhydride content of 0.6%. The product exhibited excellent adhesion to aluminum.

## Claims

1. A process for the grafting of an ethylenically unsaturated monomer onto a copolymer, said monomer being selected from the group consisting of ethylenically unsaturated carboxylic acids, and anhydrides and other derivatives thereof, and said copolymer being selected from the group consisting of

(a) copolymers of ethylene with at least one monomer selected from the group consisting of vinyl alkanoates, alkyl acrylates, alkyl methacrylates, acrylic acid, methacrylic acid and carbon monoxide, and

(b) ionomers of copolymers of (a) containing acrylic acid or methacrylic acid, and mixtures thereof, said process comprising:

(i) forming an admixture of said copolymer, monomer and 25-3000 ppm of an organic peroxide having a half-life of from about one minute to about 120 minutes at 150°C, and admixing so as to obtain a uniform distribution of monomer and peroxide in the copolymer,

(ii) mixing the resultant admixture in an extruder at a temperature above the melting point of said copolymer for a period of time that is at least four times the half life of the organic peroxide, and

(iii) extruding the resultant grafted copolymer into a shaped article.

2. A process for the grafting of an ethylenically unsaturated monomer onto a copolymer, said monomer being selected from the group consisting of ethylenically unsaturated carboxylic acids, and anhydrides and other derivatives thereof, and said copolymer being selected from the group consisting of

(a) copolymers of ethylene with at least one monomer selected from the group consisting of vinyl alkanoates, alkyl acrylates, alkyl methacrylates, acrylic acid, methacrylic acid and carbon monoxide, and

(b) ionomers of copolymers of (a) containing acrylic acid or methacrylic acid, and mixtures thereof, said process comprising:

(i) coating particles of said copolymer with 25-3000 ppm of an organic peroxide having a half-life of from about one minute to about 120 minutes at 150°C, and permitting the coated particles so obtained to absorb the organic peroxide into the particles,

(ii) further coating the particles with said monomer and permitting the resultant coated particles to absorb the monomer into the particles,

(iii) admixing the coated particles in an extruder at a temperature above the melting point of the copolymer for a period of time such that the amount of decomposition of the organic peroxide is less than 25%, said period of time being at least ten seconds,

(iv) mixing the resultant admixture thus obtained for a further period of time in the extruder that is at least four times that of the half life of the organic peroxide, and

(v) extruding the grafted copolymer thus obtained into a shaped article.

3. A process for the grafting of an ethylenically unsaturated monomer onto a copolymer, said monomer being selected from the group consisting of ethylenically unsaturated carboxylic acids, and anhydrides and other derivatives thereof, and said copolymer being selected from the group consisting of

(a) copolymers of ethylene with at least one monomer selected from the group consisting of vinyl alkanoates, alkyl acrylates, alkyl methacrylates, acrylic acid, methacrylic acid and carbon monoxide, and

(b) ionomers of copolymers of (a) containing acrylic acid or methacrylic acid, and mixtures thereof, said process comprising:

(i) feeding a physical admixture to an extruder equipped with a mixing screw, said physical admixture being comprised of (a) a major portion of particles of said copolymer, (b) a minor portion of particles of a second polymer, (c) said monomer and (d) 25-3000 ppm of an organic peroxide having a half-life of from about one minute to about 120 minutes at 150°C, said copolymer being as defined above, said second polymer being a normally solid thermoplastic polymer having a melting point of less than 180°C and a shear viscosity that is not more than 100% of that of the polymer when measured at 200°C and a shear rate of 400 sec$^{-1}$, said organic peroxide being in the form of a composition with said second polymer, said monomer being in the form of a coating on said particles and/or in the form of a composition with said second polymer,

(ii) mixing said admixture in a first zone of the extruder at a temperature above the melting point of both said copolymer and second polymer for a period of time such that the amount of decomposition of the organic peroxide is less than about 25%, said period of time being at least ten seconds,

(iii) mixing the resultant admixture in a second zone of the extruder at a temperature above the melting point of both the copolymer and second polymer for a period of time that is at least four times the half-life of the peroxide, and

(iv) extruding the grafted copolymer so obtained into a shaped article.

4. The process of Claim 3 in which the temperature of the admixture in the second zone is higher than the temperature in the first zone of the extruder.

5. The process of Claim 4 in which the temperature in step (iii) is in the range of 170-280°C.

6. The process of Claim 4 in which the temperature in step (iii) is in the range of 180-240°C.

7. The process of any one of Claims 4 to 6 in which the shear viscosity of the second polymer is not more than 50% of that of the copolymer.

8. The process of Claim 7 in which the shear viscosity of the second polymer is not more than 30% of that of the copolymer.

9. The process of any one of Claims 4 to 8 in which the second polymer is selected from the group consisting of homopolymers and copolymers of hydrocarbon alpha-olefins having 2-10 carbon atoms.

10. The process of Claim 9 in which the second polymer is selected from the group consisting of homopolymers of ethylene and copolymers of ethylene and at least one $C_4$-$C_{10}$ higher alpha-olefin.

11. The process of any one of Claims 1-10 in which the amount of organic peroxide is in the range of 100-1500 ppm.

12. The process of any one of Claims 1-10 in which the ethylenically unsaturated acid and anhydride are selected from the group consisting of acrylic acid, methacrylic acid, maleic acid, fumaric acid, itaconic acid, crotonic acid, itaconic anhydride, maleic anhydride and dimethyl maleic anhydride, and derivatives thereof.

13. The process of any one of Claims 1-11 in which the ethylenically unsaturated acid and anhydride are maleic acid and maleic anhydride.

14. The process of any one of Claims 1-13 in which the copolymer is a copolymer of ethylene and vinyl alkanoate.

15. The process of any one of Claims 1-13 in which the copolymer is a copolymer of ethylene and at least one of alkyl acrylate and alkyl methacrylate.

16. The process of any one of Claims 1-13 in which the copolymer is a copolymer of ethylene and at least one of acrylic acid and methacrylic acid, and ionomers thereof.

17. The process of any one of Claims 1-13 in which the copolymer is a copolymer of at least ethylene and carbon dioxide.

18. The process of any one of Claims 1-17 in which the amount of organic peroxide is in the range of 100-1000 ppm.